# NOUVEAU FASCICULE DE BREVET EUROPEEN

(11) **EP 1 112 800 B2**
(45) Date de publication et mention de la décision concernant l'opposition: **24.06.2009**
(45) Mention de la délivrance du brevet: 14.12.2005
(21) Numéro de dépôt: 00403437.7
(22) Date de dépôt: 07.12.2000
(51) Int. Cl.: B23K 9/10, G08B 21/00, G08C 17/02, B23K 103/00

(54) **Dispositif de commande à distance sans fil d'une installation de travail à l'arc électrique**
Vorrichtung zum Fernsteuern einer Lichtbogenschweissanlage
Control apparatus for wireless control of an arc welding installation

(30) Priorité: 03.01.2000 FR 0000019
(43) Date de publication de la demande: 04.07.2001
(73) Titulaire: L'AIR LIQUIDE, Société Anonyme pour l'Etude et l'Exploitation des Procédés Georges Claude, 75007 Paris (FR); LA SOUDURE AUTOGENE FRANCAISE, F-75007 Paris (FR)
(72) Inventeur: Briand, Francis, 75009 Paris (FR)
(74) Mandataire: Pittis, Olivier

(56) Documents cités:
- EP-A- 0 575 082
- US-A- 4 410 789
- US-A- 4 641 292
- US-A- 5 500 512

## Description

La présente invention concerne un équipement comprenant un dispositif de commande à distance d'un poste de travail à l'arc électrique, en particulier d'un poste de soudage.

Un dispositif de commande à distance est un organe de commande qui permet à un opérateur de modifier à distance l'état du générateur ou du dévidoir de fil, c'est-à-dire sans nécessité d'être situé à leur proximité immédiate.

Une commande à distance est donc très pratique car elle permet à un opérateur de régler, de re-régler, d'ajuster ou de modifier le procédé de soudage sans être obligé de revenir au générateur ou au dévidoir, où sont situées, en général, toutes les commandes.

Usuellement, une commande à distance est reliée au générateur ou au dévidoir de fil par une liaison filaire, c'est-à-dire par le biais d'un ou plusieurs câbles électriques ou similaires.

Ainsi, le document JP-A-62-6777 décrit une commande à distance avec fil classique plutôt destinée au soudage automatique comprenant un boîtier muni de plusieurs boutons dont l'actionnement permet de piloter le cycle de soudage et de plusieurs afficheurs qui donnent des indications sur les paramètres de soudage en cours de modification.

De façon analogue, le document JP-A-61-33768 a trait à une commande à distance avec fil pouvant transformer une commande en un signal modulé à haute fréquence et de le transmettre ensuite par câble.

Or, une liaison filaire, c'est-à-dire par câble ou analogue, a de multiples inconvénients pour les soudeurs, en particulier elle est encombrante, a tendance a toujours être trop courte dans la mesure où elle a tendance à se coincer dans les appareillages ou obstacles situés entre le générateur et le soudeur.

Afin de résoudre ce problème, il a été proposé d'utiliser des commandes à distances sans fil.

Ainsi, le document EP-A-0903195 décrit un système de contrôle à distance permettant de fixer un certains nombre de combinaisons de paramètres à une machine de soudage, lesquels représentent des situations de soudage, par exemple la puissance, la vitesse du fil, les niveaux de courant et la longueur des arcs électriques... et permettant ensuite de récupérer automatiquement et à distance ces différentes combinaisons de paramètres.

De façon similaire, le document EP-A-0895526 enseigne un dispositif de soudage à face avant amovible et reliée ou non par des fils audit dispositif, ladite face avant portant des touches de commande servant à commander le générateur.

Or, en pratique, il a été constaté que l'utilisation de ce type de dispositif de commande à distance sans fil conduit à l'envoi et surtout à la réception d'ordres erronés ou incomplets aux dispositifs de soudage et que, dans certains cas, les ordres envoyés par la commande à distance sans fil n'arrivent pas jusqu'au dispositif de soudage.

Ceci peut s'expliquer par le fait que les environnements de soudage, tels les ateliers de construction, les chantiers...., sont des milieux plus ou moins fortement perturbés au niveau électromagnétique, d'une part, parce que souvent de grandes masses métalliques s'y trouvent situées et, d'autre part, parce que les arcs de soudage émettent eux-mêmes des perturbations électromagnétiques.

Or, toute perturbation électromagnétique est susceptible de brouiller et gêner plus ou moins fortement les transmissions électromagnétiques, c'est-à-dire les informations et ordres transmis aux postes ou machines de soudage par les dispositifs de commande à distance du type sans fil.

En d'autres termes, ce sont donc ces phénomènes électromagnétiques qui sont à l'origine des problèmes susmentionnés liés à la réception d'ordres erronés ou incomplets par les dispositifs de soudage.

De façon analogue, le document JP-A-58-107272 enseigne une commande à distance sans fil qui, grâce à un émetteur, émet des signaux lumineux de type infrarouge vers un répéteur de signal lui même situé sur le dévidoir de fil de soudage. Ce répéteur renvoie le signal vers un récepteur situé sur le générateur de courant au travers de câbles qui relient le répéteur et le récepteur. En d'autres termes, il s'agit d'une commande à distance sans fil mais avec transmission d'informations ou d'ordres par ondes optiques, c'est-à-dire par ondes infrarouge.

Or, il a été observé en pratique que les ondes optiques de type infrarouge sont aussi très perturbées par les infrarouges ambiants et ceux émis par l'arc électrique de soudage, ce qui limite considérablement la distance maximale pouvant exister entre la commande à distance sans fil et le premier récepteur de signal, c'est-à-dire le répéteur de signal, placé sur le dévidoir, donc en général à proximité immédiate du soudeur.

Une fois que l'ordre est arrivé sur le répéteur, il doit être acheminé par câble jusqu'au générateur car sinon la liaison optique ne serait pas efficace car la distance entre la commande à distance sans fil et le générateur serait trop grande et les ordres transmis sous forme d'ondes optiques infrarouge seraient alors perturbées par les infrarouges ambiants comme expliqué ci-dessus.

Par ailleurs, on connait aussi :
- le document DE-A-4446645 qui enseigne une installation de reconnaissance à distance de véhicules équipés d'une antenne émettrice de signaux de l'ordre de 433 ou 450 MHz par exemple, utilisable notamment pour contrôler le passage des véhicules au travers des péages routiers.
- le document DE-U-9215732.7 qui propose un dispositif de commande à distance de grue émettant des signaux de fréquence égale à 4.33.92 MHz ou, de manière alternative, des signaux infrarouges.
- le document US-A-4,462,080 qui porte sur un dispositif de commande par la voix utilisable pour commander une machine-outil à commande numérique de type CNC, lequel inclut une paire de transmetteurs et une paire de récepteurs radiofréquence. Les émissions et réceptions peuvent se faire via des signaux de fréquence modulée (FM) dans les plages de hautes (HF) ou très hautes fréquences (VHF), mais aussi en amplitude modulée (AM) ou de façon digitale modulée (DM). De façon alternative, les émissions et réceptions se font aussi via des signaux lumineux ou ultrasoniques.
- et le document Meinke/Grundlach, Taschenbuch Hochfrequenztechnik, Springer Verlag, 1956, S. XXVIII, Bezeichnungen der Frequenzbereiche, qui enseigne les plages de fréquences existantes depuis les très basses fréquences (VLF) inférieures à 30 kHz jusqu'aux extrêmement hautes fréquences (EHF) de 30 à 300 GHz.

Toutefois, aucun de ces documents ne concerne la commande d'urne installation de soudage ou coupage à l'arc générant des perturbations électromagnétiques.

De là, le problème qui se pose alors dans le cadre de la présente invention est d'améliorer les dispositifs de commande à distance sans fil de manière à pouvoir obtenir des transmissions efficaces d'informations et/ou d'ordres depuis une commande à distance vers un dispositif de soudage et, si possible, de permettre de vérifier facilement que le dispositif de soudage a correctement reçu lesdites informations et/ou ordres envoyés par l'opérateur.

En d'autres termes, l'invention a pour but de proposer un équipement comprenant une installation de travail à l'arc un dispositif de commande à distance sans fil qui soit capable de passer outre les perturbations électromagnétiques susceptibles de gêner les transmissions d'informations et/ou d'ordres depuis le dispositif de commande à distance vers le dispositif de travail l'arc électrique, en particulier un générateur de courant de soudage ou de coupage.

La solution apportée par la présente invention est alors un équipement comprenant une installation de travail à l'arc et un dispositif de commande à distance sans fil, en particulier utilisable pour commander à distance une installation de travail à l'arc électrique, selon la revendication 1.

En effet, l'inventeur de la présente invention a mis en évidence que la fréquence à utiliser pour émettre et recevoir des informations dans de bonnes conditions, en milieu électromagnétiquement perturbé, a une importance primordiale, c'est-à-dire que la fréquence des informations émises ou reçues doit être comprise entre 350 MHz et 600 MHz, préférentiellement entre 380 MHz et 500 MHz.

Selon le cas, l'équipement selon l'invention peut comprendre l'une ou plusieurs des caractéristiques suivantes :
- le dispositif de commande comporte, en outre, des moyens de saisie permettant de saisir au moins un ordre et/ou une information à émettre, de préférence les moyens de saisie comportent une ou plusieurs touches à actionnement digital.
- le dispositif de commande comporte, en outre, des moyens de capture vocale permettant de capturer ou recueillir au moins un ordre vocal et/ou information vocale à émettre, comprenant au moins un microphone. Avantageusement, le microphone est muni d'un support ou d'un moyen de fixation, par exemple à pince, permettant sa fixation sur un vêtement ou dans le masque de soudage, c'est-à-dire à proximité de la bouche de l'opérateur,
- le dispositif de commande comporte des moyens de reconnaissance vocale, par exemple une carte électronique intégrant un processeur de traitement du signal associé à de la logique programmable dédiée à la reconnaissance vocale des ordres vocaux émis, permettant de reconnaître au moins un ordre vocal et/ou information vocale capturé ou recueilli par les moyens de capture vocale, et des moyens de contrôle vocal, par exemple une autre carte électronique ou alors des composants intégrés à la précédente carte électronique, agissant en réponse auxdits moyens de reconnaissance vocale, permettant d'interpréter et/ou transformer au moins un ordre vocal et/ou information vocale en au moins un signal analogique ou numérique susceptibles d'être émis sous forme de ladite onde radio codée de fréquence comprise entre 350 MHz et 600 MHz. De cette manière, les ordres ou informations émis vocalement par l'opérateur sont recueillis par les moyens de capture vocale et transmis ensuite aux moyens de reconnaissance vocale coopérant avec les moyens de contrôle vocal afin d'assurer une traduction des ordres ou informations de type vocal en ordres ou informations de type analogique ou numérique pouvant être émis sous forme d'onde radio codée de fréquence selon l'invention.
- les moyens de capture vocale sont reliés électriquement auxdits moyens de reconnaissance vocale, via des moyens de liaison électrique adéquats, tel un ou des câbles électriques ou analogue.
- des moyens de mémorisation, par exemple des composants électroniques situés sur les cartes susmentionnées tels que de la mémoire RAM ou FLASH, permettant de stocker, temporairement ou en permanence, au moins un ordre et/ou une information, et/ou des moyens de sélection permettant de sélectionner ou de rappeler au moins un ordre et/ou une information à émettre prédéfinie et/ou stockée par les moyens de mémorisation.
- le dispositif de commande comporte, en outre, des moyens de visualisation d'au moins un ordre et/ou une information à émettre ou émise, de préférence un écran de visualisation, par exemple un écran à cristaux liquides, à diodes ou analogue.
- le dispositif de commande comporte, en outre, des moyens de synthèse vocale permettant de transmettre, sous forme vocale ou orale, à l'opérateur au moins un ordre et/ou une information à émettre ou émise, de préférence l'écoute par l'opérateur de cet ordre ou information se fait par l'intermédiaire d'au moins un écouteur d'oreille ou d'au moins un mini haut-parleur, pouvant être solidarisé au casque/masque de soudage ou, le cas échéant, être fixé directement sur ou à proximité immédiatement de l'oreille ou d'un conduit auditif de l'opérateur.
- le dispositif de commande comporte, en outre, des moyens de réception d'au moins un ordre et/ou une information permettant de recevoir au moins un ordre et/ou une information ayant une fréquence comprise entre 350 MHz et 600 MHz et susceptible d'avoir été émis à distance par une installation de travail à l'arc électrique.
- le dispositif de commande comporte, en outre, des moyens de comparaison permettant de comparer au moins un ordre et/ou une information émis par les moyens d'émission à au moins un ordre et/ou une information reçu par les moyens de réception.
- les moyens d'émission permettent d'émettre au moins un ordre et/ou une information choisie par exemple parmi une intensité de courant, une vitesse de dévidage de fil, une tension, une référence ou un numéro de programme de travail à l'arc.

Avantageusement, les moyens de sélection, les moyens de mémorisation, les moyens de saisie, les moyens d'émission, les moyens de visualisation, les moyens de réception et les moyens de comparaison sont insérés à l'intérieur et/ou portés par le boîtier.

De préférence, le générateur de courant ou la source de fil est relié à une base comprenant des deuxième moyens de réception d'au moins un ordre et/ou une information permettant de recevoir au moins un ordre et/ou une information ayant une fréquence comprise entre 350 MHz et 600 MHz susceptible d'avoir été émis à distance par ledit dispositif de commande à distance sans fil.

Avantageusement, la base comprend, en outre, des deuxième moyens d'émission d'au moins un ordre et/ou une information permettant de transmettre à distance au moins un ordre et/ou une information ayant une fréquence comprise entre 350 MHz et 600 MHz audit dispositif de commande à distance sans fil.

Selon un autre aspect, l'invention concerne aussi l'utilisation d'un dispositif de commande à distance sans fil selon la revendication 11.

L'invention va maintenant être décrite plus en détail à l'aide des figures annexées, données à titre illustratif mais non limitatif.

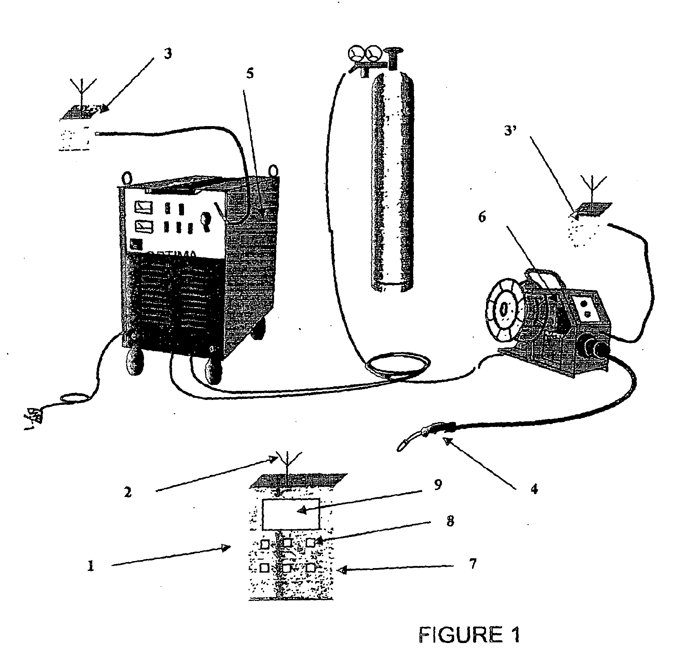

La figure 1 représente un dispositif ou organe de commande 1 à distance sans fil d'un équipement selon l'invention, c'est-à-dire qui ne comprend pas de liaison filaire.

La commande à distance 1 sans fil est équipée d'un dispositif émetteur-récepteur d'informations ou d'ordres, lesquels informations ou ordres de commande sont envoyés sous forme d'ondes radio ayant une fréquence comprise entre 350 MHz et 600 MHz, par exemple de l'ordre de 400 MHz, à une (ou plusieurs) unité de contrôle ou base 3, 3' d'un équipement de travail à l'arc électrique comportant un dispositif émetteur-récepteur relié à une torche de soudage 4, à un dévidoir 6 de fil de soudage et/ou à un générateur 5 de courant selon l'invention.

Le système peut fonctionner dans les deux sens, c'est-à-dire que l'unité de contrôle ou base 3, 3' peut aussi émettre des informations vers l'organe de commande 1 à distance, par exemples des valeurs de soudage ou des consignes, notamment la valeur du courant, de la tension ou de la vitesse d'avance du fil, ou un numéro ou une référence de programme.

En travaillant avec des informations émises sous forme d'ondes radio codées à des fréquences comprises entre 400 MHz et 600 MHz, et en validant les informations émises en les comparant aux informations reçues, on peut émettre et recevoir de manière sûre et ce, même en milieu électromagnétiquement perturbé ou hostile.

Avantageusement, pour vérifier si les informations émises ont été bien reçues par le générateur 5, il est utile d'utiliser une liaison radio sécurisée.

Quand l'émetteur-récepteur de la base reçoit un ordre et/ou un ordre et/ou une information en provenance de l'émetteur-récepteur de la commande à distance, un code représentant l'information reçue par l'émetteur-récepteur de la base est émis vers l'émetteur-récepteur de la commande à distance.

Si ce code est conforme à l'information émise, un ordre d'acquittement est alors émis vers l'émetteur-récepteur de la base et l'information initiale est alors transmise au générateur.

A l'inverse, si ce code n'est pas conforme à l'information émise, l'information initiale est alors répétée et la procédure recommence.

Il faut noter que ce processus de contrôle est un processus interne à la liaison radio.

Dans le cas de plusieurs générateurs 5 de courant utilisés, en même temps, sur un même site de soudage, on peut, par un système d'identification de chacune des unités de contrôle 3, 3', utiliser les mêmes dispositifs émetteurs-récepteurs.

La commande à distance 1 sans fil comporte un émetteur-récepteur qui émet des ordres, c'est-à-dire des modifications de l'état du générateur 5, vers la base 3 ou 3' reliée au générateur 5 ou au dévidoir 6, par exemple dans le cas du soudage MIG (Metal Inert Gas), qui comprend ou est elle même constituée d'un émetteur-récepteur.

La commande à distance 1 sans fil est formée d'un boîtier 7 comprenant de moyens de commande, c'est-à-dire des boutons 8 à actionnement digital, éventuellement d'un écran 9 d'affichage de type LCD (Liquid Crystal Display) pour afficher des informations en provenance de la base ou de la commande à distance sans fil, d'un émetteur-récepteur fonctionnant à 433 MHz par exemple, éventuellement d'une petite antenne 2 et d'une ou plusieurs batteries rechargeables (non montrées) par des moyens de rechargement pouvant être situés sur le générateur 5 ou ailleurs.

La base 3 reliée au générateur 5 comprend principalement un émetteur-récepteur à la même fréquence que celle du dispositif de commande 1 à distance. Elle reçoit les ordres en provenance de la commande à distance 1 sans fil et les transmet au générateur 5. Elle peut aussi émettre des informations vers la commande 1 à distance sans fil, telles que les valeurs des paramètres de soudage ou les numéros ou références de programme, et, de manière générale, elle peut émettre des informations sur l'état du générateur 5.

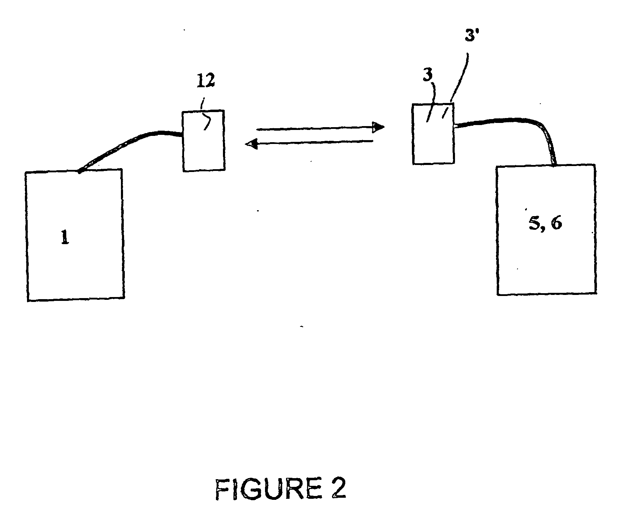

Une manière avantageuse et simple de réaliser l'invention est schématisée sur la figure 2.

Pour ce faire, on part d'une commande à distance 1 classique, c'est-à-dire avec fil, de laquelle on démonte et retire le fil.

Ensuite, on incorpore dans la commande 1 à distance un émetteur-récepteur 12 permettant d'émettre et recevoir dans la gamme de fréquences radio selon l'invention, et un système de batterie (non montré).

Par ailleurs, on relie une base 3 ou 3' comportant un deuxième émetteur-récepteur à la même fréquence que l'émetteur-récepteur 12 à la prise ou connection du générateur 5 ou du dévidoir 6, à laquelle était connectée l'autre extrémité du fil relié à la commande à distance classique avec fil, c'est-à-dire à la prise ou connection située habituellement sur la face avant du générateur 5 ou sur le dévidoir 6 (en soudage MIG).

En procédant ainsi les émetteurs-récepteurs 12, d'une part, et 3 ou 3', d'autre part, sont simplement des interfaces et cela permet de proposer la commande à distance 1 sans fil en option. Ainsi, si pour une raison ou une autre le client n'en veut pas, il peut revenir à une commande à distance classique avec fil.

Selon un autre mode de réalisation non représenté, des moyens de capture vocale, tel un microphone relié, par exemple par un câble ou analogue, au dispositif de commande 1 à distance de la figure 2, permettent de capturer ou recueillir au moins un ordre vocal et/ou information vocale à émettre. Par ailleurs, ce dispositif de commande 1 à distance peut aussi être relié à l'opérateur par l'intermédiaire d'un casque ou d'écouteurs de façon à permettre à l'opérateur d'entendre une information émise par le générateur 5, par exemple la confirmation de l'exécution d'un ordre ou de la bonne réception d'un ordre ou d'une information par ledit générateur.

Un équipement selon l'invention est particulièrement adapté pour commander à distance une installation de travail à l'arc électrique comportant un générateur de courant, une torche de travail à l'arc électrique et/ou une source de fil de soudage susceptible d'être mise en oeuvre dans une opération de soudage TIG (Tungsten Inert Gas), MIG (Metal Inert Gas), MAG (Metal Active Gas), de soudage ou coupage plasma.

## Revendications

1. Equipement comprenant:
- une installation de travail à l'arc électrique comportant un générateur de courant (5), une torche de travail (4) à l'arc électrique et/ou une source de fil (6) de soudage, et
- un dispositif de commande (1) à distance sans fil permettant de commander à distance ladite installation de travail à l'arc électrique, ledit dispositif de commande à distance (1) sans fil comprenant un boîtier (7) et des moyens d'émission d'au moins un ordre et/ou d'une information permettant d'émettre au moins un ordre et/ou une information sous forme d'une onde radio codée ayant une fréquence comprise entre 350 et 600 MHz, et ledit dispositif de commande à distance comprenant, en outre:
- des moyens de capture vocale permettant de capturer ou recueillir au moins un ordre vocal et/ou information vocale à émettre,
- des moyens de reconnaissance vocale permettant de reconnaître au moins un ordre vocal et/ou information vocale capturé ou recueilli par les moyens de capture vocale, et
- des moyens de contrôle vocal, agissant en réponse auxdits moyens de reconnaissance vocale, permettant d'interpréter et/ou transformer au moins un ordre vocal et/ou information vocale en au moins un signal analogique ou numérique susceptibles d'être émis sous forme de ladite onde radio codée de fréquence comprise entre 350 et 600 MHz.

2. Equipement selon la revendication 1, **caractérisé en ce que** la fréquence du dispositif de commande à distance (1) est comprise entre 380 MHz et 500 MHz.

3. Equipement selon l'une des revendications 1 ou 2, **caractérisé en ce que** le dispositif de commande à distance (1) comporte, en autre, des moyens de saisie permettant de saisir au moins un ordre et/ou une information à émettre, de préférence les moyens de saisie comportent une ou plusieurs touches (8) à actionnement digital.

4. Equipment selon l'une des revendications 1 à 3, **caractérisé en ce que** le dispositif de commande à distance (1) comporte des moyens de capture vocale qui comprennent au moins un microphone.

5. Equipement selon l'une des revendications 1 à 4, **caractérisé en ce que** le dispositif de commande (1) comporte des moyens de mémorisation permettant de stocker, temporairement ou en permanence, au moins un ordre et/ou une information, et/ou des moyens de sélection permettant de sélectionner ou de rappeler au moins un ordre et/ou une information à émettre prédéfini et/ou stocké par les moyens de mémorisation.

6. Equipement selon l'une des revendications 1 à 5, **caractérisée en ce que** le dispositif de commande (1) comporte, en outre, des moyens de visualisation d'au moins un ordre et/ou une information à émettre ou émise, de préférence un écran (9) de visualisation.

7. Equipement selon l'une des revendications 1 à 6, **caractérisé en ce que** le dispositif de commande (1) à distance comporte, en outre, des moyens de réception d'au moins un ordre et/ou une information permettant de recevoir au moins un ordre et/ou une information ayant une fréquence comprise entre 350 et 600 MHz et susceptible d'avoir été émis à distance par une installation de travail à l'arc électrique.

8. Equipement selon l'une des revendications 1 à 7, **caractérisé en ce que** le dispositif de commande (1) à distance comporte, en outre, des moyens de comparaison permettant de comparer au moins un ordre et/ou une information émis par les moyens d'émission à au moins un ordre et/ou une information reçu par les moyens de réception.

9. Equipement selon l'une des revendications 1 à 8, **caractérisé en ce que** les moyens d'émission du dispositif de commande (1) permettent d'émettre au moins un ordre et/ou une information choisi parmi une intensité de courant, une vitesse de dévidage de fil, une référence ou un numéro de programme de travail à l'arc.

10. Equipement selon la revendication 1, **caractérisé en ce que** le générateur de courant (5) ou la source de fil (6) est relié à une base (3,3') comprenant des deuxième moyens de réception d'au moins un ordre et/ou une information permettant de recevoir au moins un ordre et/ou une information avant une fréquence comprise entre 350 et 600 MHz susceptible d'avoir été émis à distance par ledit dispositif de commande (1) à distance sans fil, de préférence la base (3, 3') comprend, en outre, des deuxième moyens d'émission d'au moins un ordre et/ou une information permettant de transmettre distance au moins un ordre et/ou une information ayant une fréquence comprise entre 350 et 600 MHz audit dispositif de commande (1) à distance sans fil.

11. Utilisation d'un dispositif de commande à distance (1) sans fil comprenant un boîtier (7) et des moyens d'émission d'au moins un ordre et/ou d'une information permettant d'émettre au moins un ordre et/ou une information sous forme d'une onde radio codée ayant une fréquence comprise entre 350 et 600 MHz, et comprenant, en outre:
- des moyens de capture vocale permettant de capturer ou recueillir au moins un ordre vocal et/ou information vocale à émettre,
- des moyens de reconnaissance vocale permettant de reconnattre au moins un ordre vocal et/ou information vocale capturé ou recueilli par les moyens de capture vocale, et
- des moyens de contrôle vocal, agissant en réponse auxdits moyens de reconnaissance vocale, permettant d'interpréter et/ou transformer au moins un ordre vocal et/ou information vocale en au moins un signal analogique ou numérique susceptibles d'être émis sous forme de ladite onde radio codée de fréquence comprise entre 350 et 600 MHz,
pour commander à distance une installation de travail à l'arc électrique comportant un générateur (5) de courant, une torche de travail (4) à l'arc électrique et/ou une source de fil (6) de soudage.

## Claims

1. Equipment comprising:
- an electric-arc work unit consisting of a current generator (5), an electric-arc work torch (4) and/or a welding wire supply (6); and
- a wireless remote-control device (1) for remotely controlling said electric-arc work unit, said wireless remote-control device (1) comprising a module (7) and transmit means for transmitting at least one command and/or information item, making it possible to transmit at least one command and/or information item in the form of a coded radio wave having a frequency between 350 and 600 MHz, and said remote-control device further comprising:
- voice capture means for capturing or collecting at least one vocal command and/or vocal information to be transmitted,
- voice recognition means for recognizing at least one vocal command and/or vocal information captured or collected by the voice capture means; and
- voice control means, which act in response to said voice recognition means, making it possible to interpret and/or convert at least one vocal command and/or vocal information into at least one analogue or digital signal that can be transmitted in the form of said coded radio wave of frequency between 350 and 600 MHz.

2. Equipment according to Claim 1, **characterized in that** the frequency of the remote-control device (1) is between 380 MHz and 500 MHz.

3. Equipment according to either of Claims 1 and 2, **characterized in that** the remote-control device (1) further includes inputting means, for inputting at least one command and/or information to be transmitted, preferably the inputting means comprise one or more finger-actuated keys (8).

4. Equipment according to one of Claims 1 to 3, **characterized in that** the remote-control device (1) includes voice capture means which comprise at least one microphone.

5. Equipment according to one of Claims 1 to 4, **characterized in that** the control device (1) includes memory means for storing, either temporarily or permanently, at least one command and/or information, and/or selection means for selecting or recalling at least one command and/or information to be transmitted, said command and/or information being predefined and/or stored by the memory means.

6. Equipment according to one of Claims 1 to 5, **characterized in that** the control device (1) further includes display means for displaying at least one command and/or information that is to be transmitted or has been transmitted, preferably a display screen (9).

7. Equipment according to one of Claims 1 to 6, **characterized in that** the remote-control device (1) further includes receive means for receiving at least one command and/or information, making it possible to receive at least one command and/or information having a frequency between 350 MHz and 600 MHz and capable of having been transmitted remotely by an electric-arc work unit.

8. Equipment according to one of Claims 1 to 7, **characterized in that** the remote-control device (1) further includes comparison means, for comparing at least one command and/or information transmitted by the transmit means with at least one command and/or information received by the receive means.

9. Equipment according to one of Claims 1 to 8, **characterized in that** the transmit means of the control device (1) make it possible to transmit at least one command and/or information chosen from a current intensity, a wire pay-out speed and an arc work programme number or reference.

10. Equipment according to Claim 1, **characterized in that** the current generator (5) or the wire supply (6) is connected to a base (3, 3') comprising second receive means for receiving at least one command and/or information, making it possible to receive at least one command and/or information having a frequency between 350 and 600 MHz and capable of having been remotely transmitted by said wireless remote-control device (1), the base (3, 3') preferably also including second transmit means for transmitting at least one command and/or information, making it possible to remotely transmit at least one command and/or information having a frequency between 350 and 600 MHz to said wireless remote-control device (1).

11. Use of a wireless remote-control device (1) comprising a module (7) and transmit means for transmitting at least one command and/or information, making it possible to transmit at least one command and/or information in the form of a coded radio wave having a frequency between 350 and 600 MHz, and further comprising:
- voice capture means for capturing or collecting at least one vocal command and/or vocal information to be transmitted,
- voice recognition means for recognizing at least one vocal command and/or vocal information captured or collected by the voice capture means; and
- voice control means, which act in response to said voice recognition means, making it possible to interpret and/or convert at least one vocal command and/or vocal information into at least one analogue or digital signal that can be transmitted in the form of said coded radio wave of frequency between 350 and 600 MHz, for remotely controlling the electric-arc work unit comprising a current generator (5), an electric-arc work torch (4) and/or a welding wire supply (6).

## Patentansprüche

1. Ausstattung, die Folgendes umfasst:
- eine Lichtbogenarbeitsanlage, die einen Stromgenerator (5), einen Lichtbogenarbeitsbrenner (4) und/oder eine Schweißdrahtquelle (6) umfasst und
- eine drahtlose Fernsteuervorrichtung (1), die es erlaubt, die Lichtbogenarbeitsanlage fernzusteuern,
wobei die drahtlose Fernsteuervorrichtung (1) ein Gehäuse (7) und Sendemittel für mindestens einen Befehl und/oder eine Information umfasst, die es erlaubt, mindestens einen Befehl und/oder eine Information in Form einer codierten Funkwelle zu senden, die eine Frequenz zwischen 350 MHz und 600 MHz hat,
und die drahtlose Fernsteuervorrichtung weiterhin Folgendes umfasst:
- Mittel zur Spracherfassung, die es erlauben, mindestens einen Sprachbefehl und/oder eine Sprachinformation, die zu senden ist, zu erfassen oder aufzunehmen,
- Spracherkennungsmittel, die es erlauben, mindestens einen Sprachbefehl und/oder eine Sprachinformation zu erkennen, der/die von den Spracherfassungsmitteln erfasst oder aufgenommen wird, und
- Mittel zur Sprachsteuerung, die als Reaktion auf die Spracherkennungsmittel wirken, die es erlauben, mindestens einen Sprachbefehl und/oder eine Sprachinformation als mindestens ein analoges oder digitales Signal auszulegen und/oder in ein solches umzuwandeln, das in Form der codierten Funkwelle mit einer Frequenz zwischen 350 MHz und 600 MHz gesendet werden kann.

2. Ausstattung nach Anspruch 1, **dadurch gekennzeichnet, dass** die Frequenz der drahtlosen Fernsteuervorrichtung (1) zwischen 380 MHz und 500 MHz liegt.

3. Ausstattung nach einem der Ansprüche 1 oder 2, **dadurch gekennzeichnet, dass** die drahtlose Fernsteuervorrichtung (1) ferner Mittel zur Eingabe umfasst, die es erlauben, mindestens einen zu sendenden Befehl und/oder mindestens eine zu sendende Information einzugeben, und vorzugsweise umfassen die Eingabemittel eine oder mehrere Tasten (8) mit Fingerbetätigung.

4. Ausstattung nach einem der Ansprüche 1 bis 3, **dadurch gekennzeichnet, dass** die Fernsteuervorrichtung (1) Mittel zur Spracherfassung umfasst, die mindestens ein Mikrofon umfassen.

5. Ausstattung nach einem der Ansprüche 1 bis 4, **dadurch gekennzeichnet, dass** die Steuervorrichtung (1) Mittel zum Speichern umfasst, die es erlauben, vorübergehend oder ständig mindestens einen Befehl und/oder eine Information zu speichern, und/oder Auswählmittel, die es erlauben, mindestens einen Befehl und/oder eine Information, der/die zu senden ist, der/die vorausdefiniert und/oder von den Speichermitteln gespeichert ist, auszuwählen oder abzurufen.

6. Ausstattung nach einem der Ansprüche 1 bis 5, **dadurch gekennzeichnet, dass** die Steuervorrichtung (1) ferner Anzeigemittel für mindestens einen zu sendenden oder gesendeten Befehl und/oder eine zu sendende oder gesendete Information umfasst, vorzugsweise ein Anzeigedisplay (9).

7. Ausstattung nach einem der Ansprüche 1 bis 6, **dadurch gekennzeichnet, dass** die Fernsteuervorrichtung (1) ferner Mittel zum Empfangen mindestens eines Befehls und/oder einer Information umfasst, die es erlauben, mindestens einen Befehl und/oder eine Information zu empfangen, die eine Frequenz zwischen 350 MHz und 600 MHz hat und dezentral von einer Lichtbogenarbeitsanlage gesendet worden sein kann.

8. Ausstattung nach einem der Ansprüche 1 bis 7, **dadurch gekennzeichnet, dass** die Fernsteuervorrichtung (1) ferner Vergleichsmittel umfasst, die es erlauben, mindestens einen Befehl und/oder eine Information, die von den Sendemitteln gesendet wurden, mit mindestens einem Befehl und/oder einer Information, die von den Empfangsmitteln empfangen wurde, zu vergleichen.

9. Ausstattung nach einem der Ansprüche 1 bis 8, **dadurch gekennzeichnet, dass** die Sendemittel der Steuervorrichtung (1) es erlauben, mindestens einen Befehl und/oder eine Information zu senden, der/die aus einer Stromstärke, einer Drahtabwickelgeschwindigkeit, einer Referenz oder einer Lichtbogenarbeitsprogrammnummer ausgewählt ist.

10. Ausstattung nach Anspruch 1, **dadurch gekennzeichnet, dass** der Stromgenerator (5) oder die Drahtquelle (6) mit einer Basis (3,3') verbunden ist, die zweite Empfangsmittel für mindestens einen Befehl und/oder eine Information umfassen, die es erlauben, mindestens einen Befehl und/oder eine Information zu empfangen, die eine Frequenz zwischen 350 MHz und 600 MHz hat, die von der drahtlosen Fernsteuervorrichtung (1) dezentral gesendet worden sein kann, wobei die Basis (3,3') vorzugsweise ferner zweite Sendemittel für mindestens einen Befehl und/oder eine Information umfasst, die es erlauben, dezentral mindestens einen Befehl und/oder eine Information, der/die eine Frequenz zwischen 350 MHz und 600 MHz hat, an die drahtlose Fernsteuervorrichtung (1) zu senden.

11. Einsatz einer drahtlosen Fernsteuervorrichtung (1), die ein Gehäuse (7) und Sendemittel für mindestens einen Befehl und/oder eine Information umfasst, die es erlaubt, mindestens einen Befehl und/oder eine Information in Form einer codierten Funkwelle zu senden, die eine Frequenz zwischen 350 MHz und 600 MHz hat, und die weiterhin Folgendes umfasst:
- Mittel zur Spracherfassung, die es erlauben, mindestens einen Sprachbefehl und/oder eine Sprachinformation, die zu senden ist, zu erfassen oder aufzunehmen,
- Spracherkennungsmittel, die es erlauben, mindestens einen Sprachbefehl und/oder eine Sprachinformation zu erkennen, der/die von den Spracherfassungsmitteln erfasst oder aufgenommen wird, und
- Mittel zur Sprachsteuerung, die als Reaktion auf die Spracherkennungsmittel wirken, die es erlauben, mindestens einen Sprachbefehl und/oder eine Sprachinformation als mindestens ein analoges oder digitales Signal auszulegen und/oder in ein solches umzuwandeln, das in Form der codierten Funkwelle mit einer Frequenz zwischen 350 MHz und 600 MHz gesendet werden kann,
zum Fernsteuern einer Lichtbogenarbeitsanlage, die einen Stromgenerator (5), einen Lichtbogenarbeitsbrenner (4) und/oder eine Schweißdrahtquelle (6) umfasst.
